# EUROPEAN PATENT SPECIFICATION

(11) **EP 4 314 743 B1**
(45) Date of publication and mention of the grant of the patent: **22.04.2026**
(21) Application number: 22718215.1
(22) Date of filing: 28.03.2022
(51) Int. Cl.: G01L 1/22, A63B 69/00

(54) **FORCE SENSOR DEVICE FOR A CLIMBING WALL, AND SENSORIZED CLIMBING WALL**
KRAFTSENSOREINRICHTUNG FÜR EINE KLETTERWAND UND SENSORISIERTE KLETTERWAND
DISPOSITIF DE CAPTEUR DE FORCE POUR UN MUR D'ESCALADE, ET MUR D'ESCALADE SENSORIEL

(30) Priority: 29.03.2021 IT 202100007700
(43) Date of publication of application: 07.02.2024
(73) Proprietor: Politecnico di Milano, 20133 Milano (IT)
(72) Inventor: COLOMBO, Alessandro, 20129 Milano (IT); MAJ, Ramon, 20133 Milano (IT)
(74) Representative: Botti & Ferrari S.p.A.
(86) International application number: PCT/EP2022/058050
(87) International publication number: WO 2022/207528

(56) References cited:
- EP-A1- 3 708 987
- WO-A1-2019/123038
- ES-A1- 2 579 282
- US-A- 4 478 089

## Description

### Technical field

The present invention relates to a force sensor device for a climbing wall. The present invention also relates to a sensorized climbing wall.

The present invention finds a preferred and advantageous application in the field of sports and biomechanical performance monitoring, as well as in functional recovery and psychomotricity.

### Prior art

Climbing on an artificial wall is one of the most common training forms as well as the sole form currently used for the official climbing competitions, in the three recognized disciplines "Lead", "Boulder" and "Speed".

In climbing, the activity both in training and in competition consists in attempting to perform a sequence of movements which allows to go from a pair of holds called "Start" to a final hold called "Top" by solely using a specific group of holds, which in competitions are the only available holds while in training are identified by colours and/or labels.

For the purpose of evaluating the climbing skills of an athlete, it is very useful to know the force exerted on each hold to understand how and why an athlete succeeded or not in performing a certain sequence.

What is typically considered for training purposes almost exclusively concerns the increase in athlete's skills (force, endurance and mobility), while little has been done to quantitatively analyse how these skills are "spent" for climbing purposes.

There are also examples of technological instruments allowing the athlete's technical skills to be examined through an objective measure.

Document WO2019123038A1 relates to a device for fastening holds for sport climbing, equipped with a triaxial load cell comprising two first pairs of strain gauges and two second pairs of strain gauges placed in two planes respectively, which are distinct from each other, parallel to each other and parallel to the plane constituted by a climbing wall on which climbing holds are installed.

Document ES2579282A1 relates to a system for evaluation and training for climbing allowing quantification of the tensile and compressive force applied to the hold by the climber when grabbing or leaning on it, the distance, speed and acceleration at which it moves between the holds, the perpendicular distance between the climber and the climbing platform. Several load sensors are housed, on which each hold is screwed, and ultrasonic emission and reception sensors are located next to each hold, distance sensors or encoders are housed in the base of the platform, and a power system and a computer and software in charge of managing the data received are provided.

Document US4478089A discloses a force sensor for a gripper.

However, prior art solutions are not fully effective for climbing walls, particularly for detecting the three-dimensional measure of forces applied by the athlete to the holds, with a good signal level.

Moreover, in climbing walls, prior art solutions suffer from problems of connection of the sensors to the climbing wall, for example causing a discontinued interface between the sensor and the climbing wall panel, which typically consists of a multi-layered wood surface.

### Summary of the invention

An object of the present invention is to overcome drawbacks of the prior art.

A further particular object of the present invention is to allow a more effective three-dimensional measure of forces acting on a hold of a climbing wall.

A further particular object of the present invention is to perform a measure which allows to reject the contribution of bending or twisting moments acting on a hold of a climbing wall.

A further particular object of the present invention is to provide a system which can be connected and applied in an improved way to a climbing wall.

These and other objects are achieved by a force sensor device for a climbing wall and a related climbing wall according to the features of the attached claims, which are an integral part of the present description.

An idea underlying the present invention is to provide a force sensor device applied to a climbing wall, having a sensing element with an elongated body and at least one bend, to form an angled body on which six strain sensors are applied, configured for measuring six respective independent components of said force and thus rejecting the measure of bending or twisting moments.

The invention provides a force sensor device for a climbing wall as defined in claim 1.

The invention also provides for a climbing wall comprising a plurality of force sensor devices as defined in claim 15.

Advantageously, the force sensor device of the present invention composes the force measure starting from six moments acting on the sensing element, thanks to the particular geometry comprising the bend. In particular, the use of at least six strain measures to reconstruct the three force values allows, by multiplying the vector of measured strains by an appropriate calibration matrix, to reject the contribution of the moments on the measure, and also to reject the contribution of the positioning errors of the six or more strain sensors on the measure.

Advantageously, the force sensor device of the present invention is more effective in the three-dimensional force measure, with a good signal level.

Advantageously, the force sensor device of the present invention is planar and fully contained on a same plane, thus allowing to preserve an interface of a climbing wall which is completely similar to the commonly-used one.

Advantageously, the design of the force sensor device of the present invention allows a low-cost manufacture, which is essential for applications in which a large number of sensors is required, by assembling planar-geometry components which can be easily obtained, for example by manufacturing on two-axis machines.

Advantageously, the planar structure of the force sensor device of the present invention allows an improved connection on the backside of the climbing wall, remaining parallel to the plane of the climbing wall.

Also, the planar structure of the force sensor device allows reduced encumbrances and is advantageous in limited spaces.

Further features and advantages will become more apparent from the detailed description given here below, of preferred non-limiting embodiments of the present invention, and from the dependent claims which outline preferred and particularly advantageous embodiments of the invention.

### Brief description of the drawings

The invention is illustrated with reference to the following figures, given by way of non-limiting examples, in which:
- Figure 1 illustrates a force sensor device according to the present invention, applied to a climbing wall.
- Figure 2 illustrates an exploded view of the force sensor device of Figure 1.
- Figure 3 illustrates a rear view of the force sensor device of Figure 2.
- Figure 4 illustrates an embodiment of the body of a force sensor device according to the present invention.
- Figure 5 illustrates an alternative embodiment of the body of a force sensor device according to the present invention.
- Figures 6A-6F illustrate further alternative embodiments of force sensor devices according to the present invention.

In the different figures, similar elements will be identified by similar reference numbers.

### Detailed description

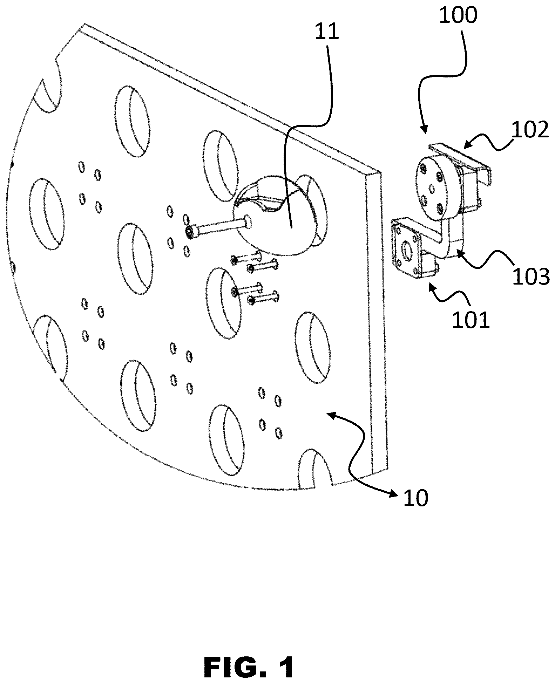

Figure 1 exemplifies the application of a force sensor device 100 according to the present invention to a climbing wall 10.

The force sensor device 100 is configured for being constrained to a surface, for example for being mechanically applied, by appropriate bolts and nuts, to the climbing wall 10.

The force sensor device 100 is further configured for mechanically connecting, by appropriate bolts and nuts, to a hold 11 of the climbing wall 10.

The force sensor device 100 is equipped with a sensing element configured for measuring components of the force applied to the hold 11, loadable by a force by an athlete.

As it is evident, the force sensor device 100 is configured for the application on a climbing wall 10, and in particular it has the following features.

The force sensor device 100 is designed to be coupled on the rear portion of the climbing wall 10. The force sensor device 100 is designed to slightly project from the front portion of the climbing wall 10, preferably by a few millimetres. The climbing wall can be fully or partially equipped with a plurality of force sensor devices and fully or partially filled with holds 11, without harming the functionality of the climbing wall 10. Holds 11 may be placed both with an interposed force sensor device, or directly to the climbing wall or on a simple non-sensorised support applied in turn to the climbing wall 10.

Thanks to the force sensor device 100, the coupled hold 11 does not lose the features and functionalities which are typical of its use, i.e. the athlete will be allowed to use the hold 11 without perceiving a significant difference due to the presence of the force sensor device 100 and to the peculiarities of the panel 10.

Advantageously, the force sensor device 100 is hooked to the climbing wall 10 and to the hold 11, making the force measure not susceptible to the presence of possible forces applied to the climbing wall 10 in other points; this is particularly important for analysing the climbing of an athlete with four limbs which simultaneously exert forces on different holds placed on the same climbing wall.

The force sensor device 100 is designed so as to house a commercial climbing hold 11 which is connected to the force sensor device 100 rather than directly to the climbing wall 10. Advantageously, the connection can be made with bolts and nuts which are similar to those used for non-sensorised holds.

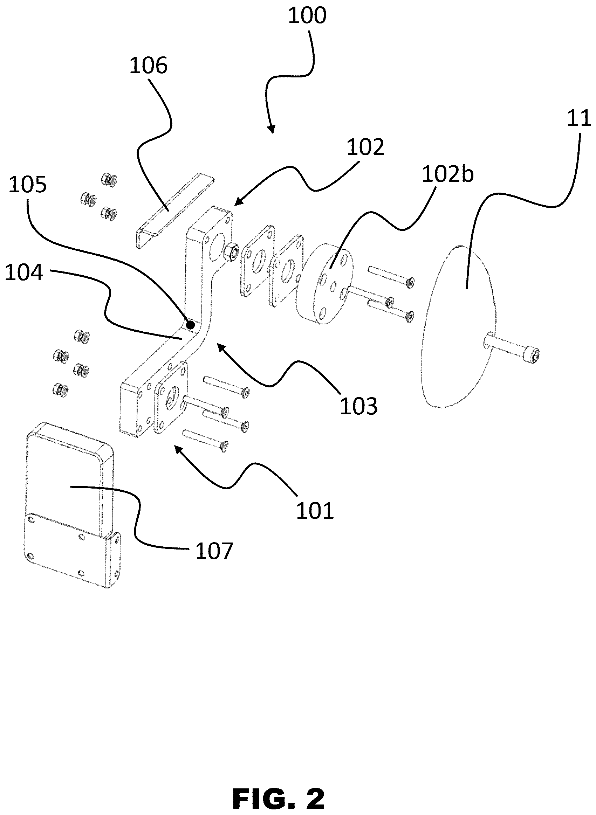

Figure 2 illustrates an exploded view of the force sensor device 100.

The force sensor device 100 comprises a mounting element 101 configured for being mechanically applied to the climbing wall, preferably by means of appropriate bolts and nuts and/or shims.

The force sensor device 100 further comprises a connecting element 102 configured for mechanically connecting to a hold 11 of the climbing wall, preferably by appropriate bolts and nuts and/or shims. The connecting element 102 further comprises a shim element 102b interposed with the hold 11; the shim element 102b has advantageously a thickness which is substantially equal to a thickness of the climbing wall 10, so as to form a substantially planar climbing wall when the hold 11 is not applied to the connecting element 102 yet. Moreover, preferably, a second shim of a few mms is placed between the shim element 102b and the connecting element 102, which has the function of bringing the front surface of the shim element 102b a few mms ahead of the front surface of the wall climbing 10. The hold 11 can thereby move in the three dimensions without touching the wall 10, even when the profile of the hold 11 exceeds the one of the shim element 102b.

The force sensor device 100 further comprises a sensing element 103 comprising an elongated body 104 structurally connecting the mounting element 101 with the connecting element 102 and configured for measuring components of the force applied to the hold 11.

The elongated body 104 comprises at least one bend 105 at least locally departing from an imaginary line linking the mounting element 101 with the connecting element 102, as will be further described.

Preferably, the force sensor device 100 further comprises an excursion-limiting element 106 applied to the connecting element 102 and configured for abutting against a rear part of the climbing wall 10, so as to prevent an excessive excursion outside the plane of the wall when the hold 11 is loaded by considerable forces.

Finally, preferably, the force sensor device 100 further comprises a signal processing unit 107, connected to appropriate interfaces to allow the force measure by one or more force sensor devices.

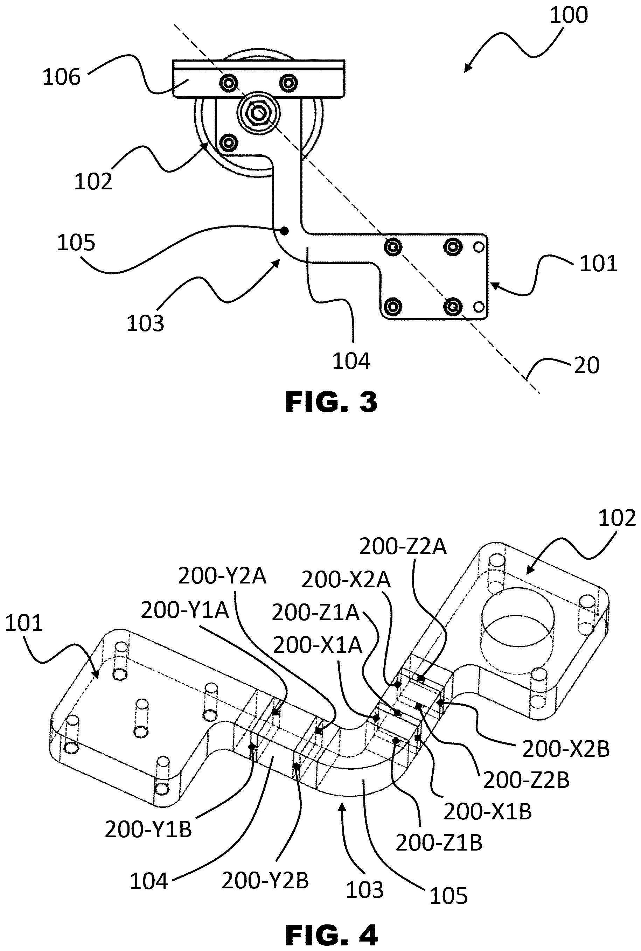

Figure 3 illustrates a rear view of the sensor device 100, from which it can be clearly appreciated that the elongated body 104 comprises at least one bend 105 at least locally departing from an imaginary line 20 linking the mounting element 101 with the connecting element 102.

As shown in the figures, the mounting element 101 and the connecting element 102 are planar. In particular, they are co-planar, substantially lying on a same plane.

In a preferred embodiment, the bend 105 defines a 90°angle in the elongated body 104.

In general, the at least one bend 105 lies on a plane which the mounting element 101, the connecting element 102 and the sensing element 103 belong to.

Figure 4 illustrates in greater detail the sensing body of the force sensor device 100 according to the present invention.

The sensing element 103 comprises at least six strain sensors 200 configured for measuring six respective independent force components.

The strain sensors 200 can be strain gauges (or equivalent instruments for measuring strains), preferably according to a "Wheatstone half-bridge" configuration.

The at least six strain sensors 200 are particularly configured for measuring triaxial force components, rejecting the measure of moments by means of a calibration matrix of the force sensor device 100.

Going into detail about the arrangement of the six strain sensors 200, they are arranged aligned two by two, respectively, in three pairs of sensors: 200-X1, 200-X2; 200-Y1, 200-Y2; 200-Z1, 200-Z2 arranged on the elongated body 104.

In general, in preferred embodiments, the elongated body 104 comprises straight tracts on which the at least six strain sensors 200 are placed. In other alternatives, the elongated body 104 could consist of a quarter circle or also of a semicircle, always comprising indeed at least one bend.

In the preferred embodiment, each of the six strain sensors consists in turn of a respective pair of strain gauge sensors, therefore:
- 200-X1 consisting of 200-X1A and 200-X1B;
- 200-X2 consisting of 200-X2A and 200-X2B;
- 200-Y1 consisting of 200-Y1A and 200-Y1B;
- 200-Y2 consisting of 200-Y2A and 200-Y2B;
- 200-Z1 consisting of 200-Z1A and 200-Z1B;
- 200-Z2 consisting of 200-Z2A and 200-Z2B.
wherein each pair of strain gauge bridges (for example, 200-X1A and 200-X1B or in general 200-**A and 200-**B where "*" defines a wildcard character, similar to as indicated in computer science) is arranged on opposite surfaces of a same longitudinal section of the elongated body 104.

Preferably, a first pair of sensors 200-X1, 200-X2 is separated by the bend 105 from a second pair of sensors 200-Y1, 200-Y2 and from a third pair of sensors 200-Z1, 200-Z2. Moreover, the second pair of sensors 200-Y1, 200-Y2 and the third pair of sensors 200-Z1, 200-Z2 are arranged on different planes of outer surfaces of the elongated body 104.

In general, preferably, the three pairs of sensors are arranged on three respective different planes X-Y-Z of the outer surfaces of the elongated body 104. Moreover, the two sensors of each pair (in general 200-*1 and 200-*2) of said three pairs of sensors are arranged on transversal sections of the elongated body 104 which are different from each other.

Preferably, the three pairs of sensors 200-X1, 200-X2; 200-Y1, 200-Y2; 200-Z1, 200-Z2 are on three faces of the elongated body, respectively, which are different from each other.

Moreover, preferably, two sensors of each pair of the three pairs of sensors (in general 200-*1 and 200-*2) are arranged on transversal sections of the elongated body 104 which are different from each other.

Moreover, since the bend 105 defines a 90° angle in the elongated body 104, the three pairs of sensors 200-X1, 200-X2; 200-Y1, 200-Y2; 200-Z1, 200-Z2 are arranged on the elongated body 104 on three respective planes X-Y-Z which are perpendicular to each other.

The person skilled in the art promptly appreciates that a greater number of strain sensors could be used, for example nine or twelve, to achieve a greater or equivalent functionality of the force sensor device 100.

By way of example, the signals measured on the six strain sensors 200 can be transformed into the values of the three three-dimensional force components through an algebraic transformation illustrated below.

During the calibration step n ≥ 6 fatigue tests are conducted, so as to load the sensor with n 6-dimensional vectors (force, moment) **x₁,** ..., **xₙ,** wherein it is assumed that the first three components represent the force components and the last three ones represent the moment components. The n tests must be designed so that the matrix X = **[x₁,** ..., **xₙ]** obtained by placing the n vectors side by side has full rank. During each of these tests, the 6 force and moment components **xᵢ** generate m ≥ 6 signals on the m strain gauge bridges. The m vectors of these signals are called **sᵢ.** In the hypothesis of small strains, that is assumed to be verified under normal use conditions of the sensor, the linear relationship **sᵢ** = **Dxᵢ** is valid, where D is an unknown matrix which depends on the sensor geometry, but also on the unavoidable small positioning errors of the strain gauge bridges on the sensor. A theoretical force value **yᵢ** (thus a vector of three elements) corresponds to each of the n tests, which coincides with the first three elements of **xᵢ.** The vectors of the n tests can be combined in the matrix Y = **[y₁,** ..., **yₙ]** with Y = **X_{[1...3]},** where the notation **X_{[1...3]}** indicates the first three rows of the matrix **X.** The relationship Y = **MDX** is thus valid, where **DX** = **[s₁,** ..., **sₙ]** is the matrix of the signals measured on the strain gauge bridges, and M is the calibration matrix that can be identified by solving the above least squares equation. Once the matrix M is identified, given a vector **sᵢ** of signals measured on the strain gauge bridges, the corresponding value of the force vector, regardless of the force application point, is given by the relationship **yᵢ = Msᵢ.**

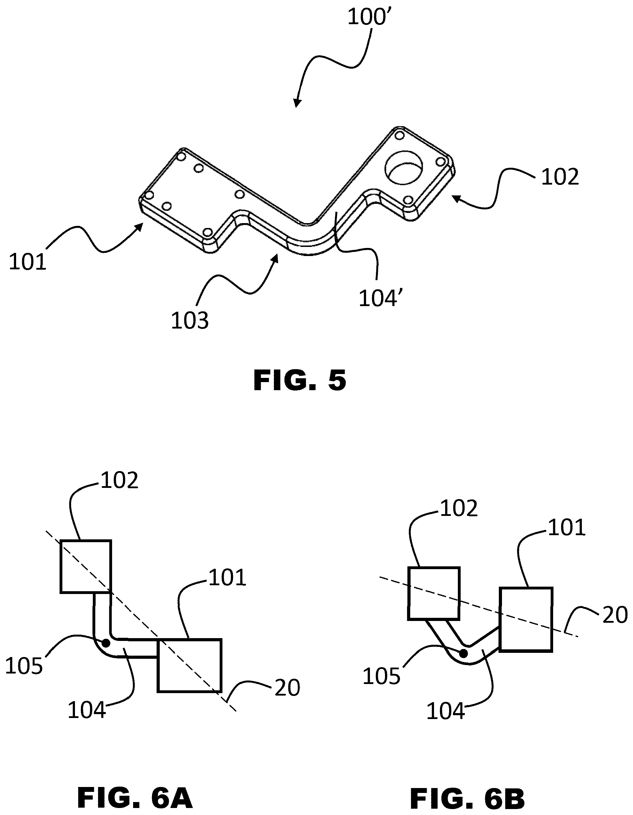

Figure 5 illustrates an alternative embodiment of the body of a force sensor device 101'.

In this embodiment, the elongated body 104' has a section with rounded edges, unlike the above elongated body 104 having square edges.

In general, the elongated body has a substantially rectangular or squared section, unless for example there are roundings or tapers, which defines planar faces which are opposite each other.

In general, the mounting element 101, the connecting element 102 and the sensing element 103 are advantageously made as a single piece, preferably by cutting a flat metal sheet so as to reduce manufacturing costs.

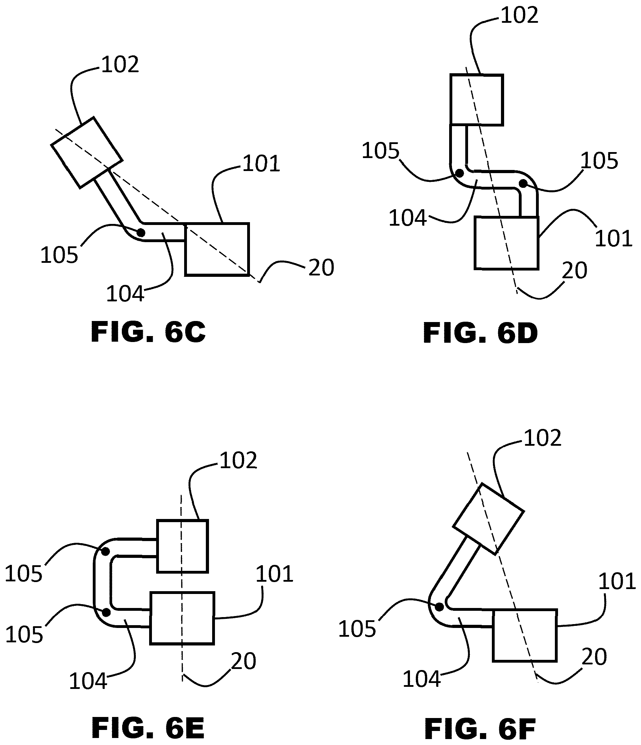

Figures 6A-6F illustrate further alternative embodiments of force sensor devices according to the present invention.

In general, in the force sensor device according to the present invention, the elongated body 104 comprises at least one bend 105 at least locally departing from an imaginary line 20 linking the mounting element 101 with the connecting element 102.

In Figure 6A the elongated body 104 has a 90° bend linking the mounting element 101 with the connecting element 102 in a L-shape.

In Figure 6B the elongated body 104 has a 90° bend linking the mounting element 101 with the connecting element 102 in a more compact shape, wherein the edges of the mounting element 101 and of the connecting element 102 are not parallel to the main directions of the elongated body 104.

In Figure 6C the elongated body 104 has a bend of about 45° linking the mounting element 101 with the connecting element 102 in a more open shape.

In Figure 6D the elongated body 104 has a pair of 90° bends linking the mounting element 101 with the connecting element 102 in a S-shape.

In Figure 6E the elongated body 104 has a pair of 90° bends linking the mounting element 101 with the connecting element 102 in a C-shape.

In Figure 6C the elongated body 104 has a bend of about 135° linking the mounting element 101 with the connecting element 102 in a more folded shape.

Functioning of a climbing wall equipped with a plurality of force sensor devices, is now described.

A signal processing unit 107 with a dedicated acquisition board is provided, preferably equipped with a single multiplexed high-resolution (typically 24 bit) Analog to Digital Converter (ADC) or with multiple ADCs. Preferably the signal processing unit 107 is placed as close as possible to the sensing element 103, in order to minimize measurement noise. The ADC or ADCs sample the strain gauge bridges independently, with the required frequency, then compute the force vector by merging the independent measures through a linear transformation identified by matrix M described above.

Preferably, the acquisition board is equipped with a network interface (for example: CAN, Ethernet, or equivalent) and a precisely clocked microcontroller. The microcontroller controls the ADC to sample the strain gauge bridges, computes the resulting force-vector measure, and attaches to the force-vector measure a timestamp before sending the information through a network.

A central node is also provided in association to the force sensor devices of the climbing wall. The central node receives the data streams from the plurality of acquisition boards of the force sensor devices in the network, The central node utilizes its own clock and the time stamps of the packets received from the force sensor devices to synchronize the data streams; this allows to temporally align the data streams coming from all force sensor devices on the climbing wall with a precision that can exceed 1 ms, through the use of appropriate network clock synchronization protocols.

Besides the advantage of locating the ADCs physically close to the strain gauge bridges, the usage of a digital network such as CAN or Ethernet allows to easily add and remove nodes (i.e., force sensor devices) to the network and to handle a much larger number of sensors than it would be possible using a single centralized acquisition board for all sensors.

### Industrial applicability

In a preferred application, the force sensor device 101 is used in a climbing wall i.e. a panel structure which can be used for training and/or competitions, which is able to house 3D force sensors according to the present invention to be interposed between the structure and the holds, preferably commonly-used commercial holds. In this case, data measured by the force sensor device 101 are sent in real time, through a wired or wireless connection, to a receiver (a smartphone, a PC or any programmable electronic counter with storage and display of recorded and processed data), where they are interpreted by a software. This software, by way of example, can illustrate with an infographic how much force the climber is exerting/has exerted on each hold during the sequence of movements. From the measure in time of the force on each of the holds, it is possible to reconstruct the trend in time of the force exerted by each limb. Each hold can be assigned an evaluation weight, expressed as a single scalar amount or rather as a table of pairs (weight, direction), which describes how much force can be exerted on a hold in a certain spatial direction. Through a climbing wall equipped with a plurality of force sensor devices according to the present invention, it will thus be possible to compare the muscle work of an athlete in different repetitions of a given exercise, or to compare different athletes with each other when performing a same exercise.

In another exemplary application, it is envisaged to use a plurality of force sensor devices according to the present invention to make a test climbing wall structure for footwear, particularly for climbing footwear. In this case, it is envisaged to apply five force sensor devices on a climbing wall panel being about one meter wide and two meters high, placing three devices in the bottom portion and two devices in the top portion. The so-obtained system corresponds to a planar surface having smaller dimensions than a climbing wall. As mentioned, different holds loadable by a force (for example: commercial climbing holds, rock fragments, other materials, etc.) may be applied on the three connecting elements of the bottom devices while simple handles or knobs may be provided on the two connecting elements of the top devices, for a better grip by a user. During the test step, athletes may conduct test protocols to emphasize performance differences of rubbers-footwear combinations.

In still another exemplary application, it is envisaged to apply one or more force sensor devices according to the present invention to form a climbing wall structure of elements which are loadable by a hold or a handle, on which an athlete or a patient undergoing a psychomotor or rehabilitation treatment can put its hands or feet, and perform different bodyweight exercises (for example push-ups, pull-ups, bar exercises, etc.) allowing a sports or healthcare worker to monitor the exercise performance. This embodiment may be particularly effective for evaluating motor skills and evolution thereof, in post-traumatic or disabled patients, for example affected by cerebral palsy.

Considering the description herein provided, the person skilled in the art will be allowed to devise further modifications and alternatives, in order to meet contingent and specific needs.

For example, although the force sensor device 101 has been described with a body substantially made as a single piece, it could be made of several separated components assembled with each other.

The embodiments described herein are therefore to be understood as illustrative and non-limiting examples of the invention.

## Claims

1. Force sensor device (100) for a climbing wall (10), comprising:
- a mounting element (101) configured for being mechanically applied and constrained to a surface of said climbing wall (10);
- a connecting element (102) configured for mechanically connecting to a hold (11) of said climbing wall (10), said hold (11) being loadable by said force;
- a sensing element (103) comprising an elongated body (104) structurally connecting said mounting element (101) with said connecting element (102) and configured for measuring components of said force, wherein said sensing element (103) comprises at least six strain sensors (200) configured for measuring six respective independent components of said force,
**characterized in that** said elongated body (104) comprises at least one bend (105) at least locally departing from an imaginary line (20) linking said mounting element (101) with said connecting element (102),
and **in that** said mounting element (101) and said connecting element (102) are planar and said at least one bend (105) lies on a plane which said mounting element (101), said connecting element (102) and said sensing element (103) all belong to,
wherein said connecting element (102) further comprises a shim element (102b) configured to be interposed with said hold (11). to.

2. Force sensor device according to claim 1, wherein said mounting element (101) is configured for application with its planar surface flush with a back surface of said climbing wall (10), and wherein said connecting element (102) is configured for connecting to said hold (11) by passing through a suitable hole provided in said climbing wall (10).

3. Force sensor device according to claim 1 or 2, wherein said six strain sensors (200) are arranged aligned two by two, respectively, in three pairs of sensors (200-X1, 200-X2; 200-Y1, 200-Y2; 200-Z1, 200-Z2) arranged on said elongated body.

4. Force sensor device according to claim 3, wherein a first pair of sensors (200) is separated by said bend (105) from a second pair of sensors (200) and from a third pair of sensors (200),
and wherein said second pair of sensors (200) and said third pair of sensors (200) are arranged on different planes of outer surfaces of said elongated body (104).

5. Force sensor device according to claim 4, wherein said three pairs of sensors (200-X1, 200-X2; 200-Y1, 200-Y2; 200-Z1, 200-Z2) are arranged on three respective different planes of outer surfaces of said elongated body (104),
and wherein two sensors of each pair of said three pairs of sensors (200-X1, 200-X2; 200-Y1, 200-Y2; 200-Z1, 200-Z2) are arranged on transversal sections of said elongated body (104) which are different from each other.

6. Force sensor device according to any one of claims 3 to 5, wherein said three pairs of sensors (200-X1, 200-X2; 200-Y1, 200-Y2; 200-Z1, 200-Z2) are respectively on three faces of said elongated body (104) which are different from each other.

7. Force sensor device according to any one of claims 3 to 6, wherein said bend (105) defines a 90° angle in said elongated body (104),
and wherein said three pairs of sensors (200-X1, 200-X2; 200-Y1, 200-Y2; 200-Z1, 200-Z2) are arranged on said elongated body (104) on three respective planes which are perpendicular to each other.

8. Force sensor device according to any one of claims 1 to 7, wherein said mounting element (101), said connecting element (102) and said sensing element (103) are made as a single piece by cutting a flat metal sheet.

9. Force sensor device according to any one of claims 1 to 8, wherein said elongated body (104) further comprises straight tracts on which said at least six strain sensors (200) are placed.

10. Force sensor device according to any one of claims 1 to 9, wherein said six strain sensors (200) comprise six respective pairs of strain gauge bridges (200-X1A, 200-X1B; 200-X2A, 200-X2B; 200-Y1A, 200-Y1B; 200-Y2A, 200-Y2B; 200-Z1A, 200-Z1B; 200-Z2A, 200-Z2B), each pair of strain gauge bridges being arranged on opposite surfaces of a same longitudinal section of said elongated body (104).

11. Force sensor device according to any one of claims 1 to 10, wherein said elongated body (104) has a substantially rectangular or squared section which defines planar faces that are opposite each other.

12. Force sensor according to any one of claims 1 to 11, wherein said shim element (102b) having a thickness substantially equal to a thickness of panels of said climbing wall (10).

13. Force sensor device according to any one of claims 1 to 12, further comprising an excursion-limiting element (106) applied to said connecting element (102) and configured for abutting against a back surface of said climbing wall (10), so as to limit a maximum excursion of said hold (11).

14. Force sensor device according to any one of claims 1 to 13, wherein said at least six strain sensors (200) are further configured for measuring triaxial components of said force rejecting the measure of moments by means of a calibration matrix of said force sensor device (100).

15. Climbing wall (10) comprising a plurality of force sensor devices (100) according to any one of claims 1 to 14.

## Patentansprüche

1. Kraftsensorvorrichtung (100) für eine Kletterwand (10), die Folgendes umfasst:
- ein Befestigungselement (101), das konfiguriert ist, an einer Oberfläche der Kletterwand (10) mechanisch angebracht und gehalten zu werden;
- ein Verbindungselement (102), das konfiguriert ist zum mechanischen Verbinden mit einem Griff (11) der Kletterwand (10), wobei der Griff (11) durch die Kraft belastbar ist; und
- ein Erfassungselement (103), das einen langgestreckten Körper (104) umfasst, der das Befestigungselement (101) mit dem Verbindungselement (102) strukturell verbindet und zum Messen von Komponenten der Kraft konfiguriert ist, wobei das Erfassungselement (103) mindestens sechs Dehnungssensoren (200) umfasst, die zum Messen von sechs jeweiligen unabhängigen Komponenten der Kraft konfiguriert sind,
**dadurch gekennzeichnet, dass** der langgestreckte Körper (104) mindestens eine Biegung (105) umfasst, die von einer imaginären Linie (20), die das Befestigungselement (101) mit dem Verbindungselement (102) verbindet, mindestens lokal abweicht,
und dass das Befestigungselement (101) und das Verbindungselement (102) eben sind und die mindestens eine Biegung (105) in einer Ebene liegt, der das Befestigungselement (101), das Verbindungselement (102) und das Erfassungselement (103) alle angehören,
wobei das Verbindungselement (102) ferner ein Beilagelement (102b) umfasst, das konfiguriert ist, mit dem Griff (11) zwischengeschaltet zu werden.

2. Kraftsensorvorrichtung nach Anspruch 1, wobei das Befestigungselement (101) zur Anwendung mit seiner ebenen Oberfläche bündig mit einer Rückoberfläche der Kletterwand (10) konfiguriert ist und das Verbindungselement (102) zum Verbinden mit dem Griff (11) durch Verlaufen durch ein geeignetes Loch, das in der Kletterwand (10) vorgesehen ist, konfiguriert ist.

3. Kraftsensorvorrichtung nach Anspruch 1 oder 2, wobei die sechs Dehnungssensoren (200) in drei Paaren von Sensoren (200-X1, 200-X2; 200-Y1, 200-Y2; 200-Z1, 200Z2), die auf dem langgestreckten Körper angeordnet sind, jeweils paarweise ausgerichtet angeordnet sind.

4. Kraftsensorvorrichtung nach Anspruch 3, wobei ein erstes Paar Sensoren (200) durch die Biegung (105) von einem zweiten Paar Sensoren (200) und von einem dritten Paar Sensoren (200) getrennt ist
und das zweite Paar Sensoren (200) und das dritte Paar Sensoren (200) auf verschiedenen Ebenen von Außenoberflächen des langgestreckten Körpers (104) angeordnet sind.

5. Kraftsensorvorrichtung nach Anspruch 4, wobei die drei Paare von Sensoren (200-X1, 200-X2; 200-Y1, 200-Y2; 200-Z1, 200-Z2) auf drei jeweiligen verschiedenen Ebenen von Außenoberflächen des langgestreckten Körpers (104) angeordnet sind
und zwei Sensoren jedes Paars der drei Paare von Sensoren (200-X1, 200-X2; 200-Y1, 200-Y2; 200-Z1, 200-Z2) auf schrägen Abschnitten des langgestreckten Körpers (104) angeordnet sind, die voneinander verschieden sind.

6. Kraftsensorvorrichtung nach einem der Ansprüche 3 bis 5, wobei die drei Paare von Sensoren (200-X1, 200-X2; 200-Y1, 200-Y2; 200-Z1, 200-Z2) jeweils auf drei Flächen des langgestreckten Körpers (104) sind, die voneinander verschieden sind.

7. Kraftsensorvorrichtung nach einem der Ansprüche 3 bis 6, wobei die Biegung (105) einen 90°-Winkel im langgestreckten Körper (104) definiert
und die drei Paare von Sensoren (200-X1, 200-X2; 200-Y1, 200Y2; 200-Z1, 200-Z2) auf dem langgestreckten Körper (104) auf drei jeweiligen Ebenen angeordnet sind, die senkrecht zueinander sind.

8. Kraftsensorvorrichtung nach einem der Ansprüche 1 bis 7, wobei das Befestigungselement (101), das Verbindungselement (102) und das Erfassungselement (103) durch Schneiden eines flachen Blechs als ein einzelnes Stück hergestellt sind.

9. Kraftsensorvorrichtung nach einem der Ansprüche 1 bis 8, wobei der langgestreckte Körper (104) ferner gerade Trakte umfasst, auf denen die mindestens sechs Dehnungssensoren (200) angeordnet sind.

10. Kraftsensorvorrichtung nach einem der Ansprüche 1 bis 9, wobei die sechs Dehnungssensoren (200) sechs jeweilige Paare von Dehnungsmessbrücken (200-X1A, 200-X1B; 200-X2A, 200-X2B; 200-Y1A, 200Y1B; 200-Y2A, 200-Y2B; 200-Z1A, 200-Z1B; 200-Z2A, 200-Z2B) umfassen und jedes Paar Dehnungsmessbrücken an gegenüberliegenden Oberflächen desselben Längsabschnitts des langgestreckten Körpers (104) angeordnet ist.

11. Kraftsensorvorrichtung nach einem der Ansprüche 1 bis 10, wobei der langgestreckte Körper (104) einen im Wesentlichen rechteckigen oder quadratischen Abschnitt aufweist, der ebene Flächen definiert, die einander gegenüberliegen.

12. Kraftsensor nach einem der Ansprüche 1 bis 11, wobei das Beilagelement (102b) eine Dicke aufweist, die im Wesentlichen gleich einer Dicke von Paneelen der Kletterwand (10) ist.

13. Kraftsensorvorrichtung nach einem der Ansprüche 1 bis 12, die ferner ein Auslenkungsbeschränkungselement (106) umfasst, das auf dem Verbindungselement (102) angebracht ist und konfiguriert ist zum Anliegen an einer Rückoberfläche der Kletterwand (10), um eine Maximalauslenkung des Griffs (11) zu beschränken.

14. Kraftsensorvorrichtung nach einem der Ansprüche 1 bis 13, wobei die mindestens sechs Dehnungssensoren (200) ferner zum Messen dreiachsiger Komponenten der Kraft konfiguriert sind, wobei das Maß von Momenten mittels einer Kalibriermatrix der Kraftsensorvorrichtung (100) verworfen wird.

15. Kletterwand (10), die mehrere Kraftsensorvorrichtungen (100) nach einem der Ansprüche 1 bis 14 umfasst.

## Revendications

1. Dispositif capteur de force (100) pour un mur d'escalade (10), comprenant:
- un élément de montage (101) configuré pour être appliqué et contraint mécaniquement à une surface dudit mur d'escalade (10);
- un élément de connexion (102) configuré pour se connecter mécaniquement à une prise (11) dudit mur d'escalade (10), ladite prise (11) pouvant être sollicitée par ladite force;
- un élément de détection (103) comprenant un corps allongé (104) connectant structurellement ledit élément de montage (101) audit élément de connexion (102) et configuré pour mesurer des composantes de ladite force,
dans lequel ledit élément de détection (103) comprend au moins six capteurs de déformation (200) configurés pour mesurer six composantes indépendantes respectives de ladite force,
**caractérisé en ce que** ledit corps allongé (104) comprend au moins une courbure (105) s'écartant au moins localement d'une ligne imaginaire (20) reliant ledit élément de montage (101) audit élément de connexion (102),
et **en ce que** ledit élément de montage (101) et ledit élément de connexion (102) sont planaires et ladite au moins une courbure (105) se trouve sur un plan auquel ledit élément de montage (101), ledit élément de connexion (102) et ledit élément de détection (103) appartiennent tous,
dans lequel ledit élément de connexion (102) comprend en outre un élément de cale (102b) configuré pour être interposé avec ladite prise (11).

2. Dispositif capteur de force selon la revendication 1, dans lequel ledit élément de montage (101) est configuré pour être appliqué avec sa surface planaire affleurant une surface arrière dudit mur d'escalade (10), et dans lequel ledit élément de connexion (102) est configuré pour se connecter à ladite prise (11) en passant par un trou approprié prévu dans ledit mur d'escalade (10).

3. Dispositif capteur de force selon la revendication 1 ou 2, dans lequel lesdits six capteurs de déformation (200) sont disposés respectivement alignés deux par deux, en trois paires de capteurs (200-X1, 200-X2; 200-Y1, 200-Y2; 200-Z1, 200-Z2) disposées sur ledit corps allongé.

4. Dispositif capteur de force selon la revendication 3, dans lequel une première paire de capteurs (200) est séparée par ladite courbure (105) d'une deuxième paire de capteurs (200) et d'une troisième paire de capteurs (200),
et dans lequel ladite deuxième paire de capteurs (200) et ladite troisième paire de capteurs (200) sont disposées sur des plans différents de surfaces extérieures dudit corps allongé (104).

5. Dispositif capteur de force selon la revendication 4, dans lequel lesdites trois paires de capteurs (200-X1, 200-X2; 200-Y1, 200-Y2; 200-Z1, 200-Z2) sont disposées sur trois plans différents respectifs de surfaces extérieures dudit corps allongé (104),
et dans lequel deux capteurs de chaque paire desdites trois paires de capteurs (200-X1, 200-X2; 200-Y1, 200-Y2; 200-Z1, 200-Z2) sont disposés sur des sections transversales dudit corps allongé (104) qui sont différentes les unes des autres.

6. Dispositif capteur de force selon l'une quelconque des revendications 3 à 5, dans lequel lesdites trois paires de capteurs (200-X1, 200-X2; 200-Y1, 200-Y2; 200-Z1, 200-Z2) sont respectivement sur trois faces dudit corps allongé (104) qui sont différentes les unes des autres.

7. Dispositif capteur de force selon l'une quelconque des revendications 3 à 6, dans lequel ladite courbure (105) définit un angle de 90° dans ledit corps allongé (104),
et dans lequel lesdites trois paires de capteurs (200-X1, 200-X2; 200-Y1, 200-Y2; 200-Z1, 200-Z2) sont disposées sur ledit corps allongé (104) sur trois plans respectifs qui sont perpendiculaires les uns aux autres.

8. Dispositif capteur de force selon l'une quelconque des revendications 1 à 7, dans lequel ledit élément de montage (101), ledit élément de connexion (102) et ledit élément de détection (103) sont réalisés en une seule pièce par découpe d'une feuille métallique plate.

9. Dispositif capteur de force selon l'une quelconque des revendications 1 à 8, dans lequel ledit corps allongé (104) comprend en outre des tronçons droits sur lesquels sont placés lesdits au moins six capteurs de déformation (200).

10. Dispositif capteur de force selon l'une quelconque des revendications 1 à 9, dans lequel lesdits six capteurs de déformation (200) comprennent six paires respectives de ponts à jauges extensométriques (200-X1A, 200-X1B; 200-X2A, 200-X2B; 200-Y1A, 200-Y1B; 200-Y2A, 200-Y2B; 200-Z1A, 200-Z1B; 200-Z2A, 200-Z2B), chaque paire de ponts à jauges extensométriques étant disposée sur des surfaces opposées d'une même section longitudinale dudit corps allongé (104).

11. Dispositif capteur de force selon l'une quelconque des revendications 1 à 10, dans lequel ledit corps allongé (104) a une section sensiblement rectangulaire ou carrée définissant des faces planaires qui sont opposées les unes aux autres.

12. Capteur de force selon l'une quelconque des revendications 1 à 11, dans lequel ledit élément de cale (102b) a une épaisseur sensiblement égale à une épaisseur de panneaux dudit mur d'escalade (10).

13. Dispositif capteur de force selon l'une quelconque des revendications 1 à 12, comprenant en outre un élément de limitation de course (106) appliqué audit élément de connexion (102) et configuré pour venir en butée contre une surface arrière dudit mur d'escalade (10), de manière à limiter une course maximale de ladite prise (11).

14. Dispositif capteur de force selon l'une quelconque des revendications 1 à 13, dans lequel lesdits au moins six capteurs de déformation (200) sont en outre configurés pour mesurer des composantes triaxiales de ladite force en rejetant la mesure de moments au moyen d'une matrice d'étalonnage dudit dispositif capteur de force (100).

15. Mur d'escalade (10) comprenant une pluralité de dispositifs capteurs de force (100) selon l'une quelconque des revendications 1 à 14.
